Europäisches Patentamt

**European Patent Office**

**Office européen des brevets**

(11) Veröffentlichungsnummer: **0 062 693**

**A1**

(12) **EUROPÄISCHE PATENTANMELDUNG**

(21) Anmeldenummer: **81106952.5**

(22) Anmeldetag: **04.09.81**

(51) Int. Cl.³: **B 23 C 5/10**
**B 23 C 5/18**

(30) Priorität: **10.04.81 DE 8110928 U**

(43) Veröffentlichungstag der Anmeldung:
**20.10.82 Patentblatt 82/42**

(84) Benannte Vertragsstaaten:
**AT BE CH DE FR GB IT LI LU NL SE**

(71) Anmelder: **Biax-Werkzeuge KG Wezel & Co.**
**Talweg 1**
**D-7133 Maulbronn(DE)**

(72) Erfinder: **Wezel, Hans Georg**
**Frankfurterstrasse 19**
**D-7133 Maulbronn(DE)**

(74) Vertreter: **Dreiss, Uwe, Dr. jur. Dipl.-Ing. M.Sc. et al,**
**Patentanwälte Dreiss, Hosenthien & Fuhlendorf**
**Gerokstrasse 6**
**D-7000 Stuttgart 1(DE)**

(54) **Fräswerkzeug.**

(57) Bei einem Fräswerkzeug mit n schraubenlinienförmig verlaufenden Schneiden, die in ihrem Längsverlauf in etwa sägeförmig mit einer Teilung T ausgebildete Einzelschneiden (5) mit je einer steil und einer flach gegenüber der Fräserachse geneigten Schneidkante aufgeteilt sind, wobei mindestens eine der Schneidkanten (6) abgerundet ist und die Einzelschneiden (5) um T/n in Schneidenrichtung versetzt angeordnet sind, wird vorgeschlagen, zur preiswerteren und rationelleren Herstellung und Erhöhung der Gebrauchsdauer durch eine möglichst große Anzahl von Nachschliffmöglichkeiten die Einzelschneiden (5) in an sich bekannter Weise durch auf den Fräserkörper (2) aufgelötete Hartmetallschneidplatten (3) mit etwa Rechteckquerschnitt auszubilden, wobei dann die lange Querschnittseite etwa parallel zur Umfangsrichtung verlaufend vorgesehen wird, um an der Zahnbrust möglichst oft nachschleifen zu können.

Fig. 2

EP 0 062 693 A1

# DREISS, HOSENTHIEN & FUHLENDORF 0062693

**PATENTANWÄLTE**

Beim Europäischen Patentamt zugelassene Vertreter
European Patent Attorneys

HANS LANGOSCH
Dipl.-Ing. (1963 - 1981)
UWE DREISS
Dr. jur., Dipl.-Ing., M Sc
HEINZ HOSENTHIEN
Dr.-Ing., Dipl.-Ing.
JÖRN FUHLENDORF
Dipl.-Ing.

D-7000 STUTTGART 1
GEROKSTRASSE 6
TF (07 11) 24 57 34/44
TG IDEAPAT
TX 7-22 247 idea d

P für Besucher

DREISS, HOSENTHIEN & FUHLENDORF, D-7000 STUTTGART 1

**Anmelderin:**

BIAX-Werkzeuge KG Wezel & Co.
Präzisionswerkzeugfabrik
Talweg 1
7133 Maulbronn

| Amtl. Akt. Z.<br>Off Ser No. | Ihr Zeichen<br>Your Ref. | Unser Zeichen<br>Our Ref<br>3910 181 | Datum<br>Date |
|---|---|---|---|

## Fräswerkzeug

Die Erfindung betrifft ein Fräswerkzeug mit n schraubenlinienförmig verlaufenden Schneiden, die in ihrem Längsverlauf in etwa sägeförmig mit einer Teilung T ausgebildete Einzelschneiden mit je einer steil und einer
flach gegenüber der Fräserachse geneigten Schneidkante
aufgeteilt sind, wobei mindestens eine der Schneidkanten

- 2 -

abgerundet ist und die Einzelschneiden um $\frac{T}{n}$ in Schneidenrichtung versetzt angeordnet sind.

Ein solches als Fingerfräser ausgebildetes Fräswerkzeug ist aus der DE-PS 25 33 079 bekannt. Die Herstellung als Vollhartmetall-Fräswerkzeug ist aufwendig und teuer, insbesondere wegen der hohen Werkstoffkosten, obwohl durch die relativ lange Lebensdauer ein gewisser Ausgleich gegenüber Fräswerkzeugen besteht, die nur mit Hartmetallschneidplatten bestückt sind. Üblicherweise sind diese Hartmetallschneidplatten im Querschnitt rechteckförmig, wobei die Platten so im Werkzeugkörper eingelötet sind, daß ihre Breitenerstreckung zur Fräserachse hin gerichtet ist. Üblicherweise wird nun zum Schärfen der Nachschliff an der Spanfläche vorgenommen. Die Anzahl der möglichen Nachschliffe ist hier durch die Dicke der Hartmetallschneidplatte begrenzt.

Aufgabe der vorliegenden Erfindung ist es, ein Fräswerkzeug der eingangs genannten so zu verbessern, daß es bei preiswerter rationeller Herstellung eine lange Gebrauchsdauer bei möglichst großer Anzahl von Nachschliffmöglichkeiten aufweist.

Zur Lösung dieser Aufgabe sieht die Erfindung vor, daß die Einzelschneiden in an sich bekannter Weise durch auf den Fräserkörper aufgelötete Hartmetall- schneidplatten mit etwa Rechteckquerschnitt gebildet sind und daß die lange Querseite etwa parallel zur Umfangsrichtung verlaufend angeordnet ist. Hierdurch kann der Fräserkörper aus billigerem Werkstoff hergestellt werden und es wird durch die vorgeschlagene Anordnung der Hartmetallschneidplatten ein häufiges Nachschleifen an der Spanfläche ermöglicht.

Die Bruchgefahr der Einzelschneiden und eine wesentliche Verbilligung der Herstellung kann dadurch erreicht werden, daß jede Schneide durch mehrere Hartmetall- einzelstücke gebildet wird. Kleinere Hartmetalleinzel- stücke sind in der Herstellung wesentlich billiger als lang ausgebildete einstückige Schneiden. Die Ausschuß- und Bruchgefahr ist wesentlich geringer und auch die Empfindlichkeit gegen stoßartige Beanspruchungen. Zweckmäßigerweise sind die einzelnen Hartmetallstücke zur Bildung einer Schneide eng nebeneinander angeordnet, dabei kann besonders vorteilhaft jede Einzelschneide durch ein solches Hartmetalleinzelstück gebildet sein.

Eine besonders hohe Schneidleistung, insbesondere für das Schruppfräsen kann dadurch erreicht werden, daß die steile und die flache Schneidkante jeweils etwa eine konstante Krümmung mit einem Krümmungsradius R 1 bzw. R 2 aufweisen, wobei zur Verbesserung des Spanabflusses noch jede Teilung der Schneide eine Spanbrechernut aufweisen kann. Eine besonders stabile wenig stoßanfällige Schneidenausbildung kann dadurch erreicht werden, daß die einzelnen Hartmetallstücke im Bereich der Spanbrechernuten aneinandergrenzend angeordnet sind.

Bei einer bevorzugten Ausführungsform liegen die Krümmungsmittelpunkte der beiden Schneidkanten mit unterschiedlichen Krümmungsradien R1, R2 auf einer Schneidennormalen, dabei schneidet diese Schneidennormale die Schneide im Übergangspunkt der beiden Krümmungsradien R1, R2, so daß ein stetiger Übergang mit besonders günstigem Spanfließverhalten erreicht werden kann.

Als besonders zweckmäßig hat sich erwiesen, die beiden unterschiedlichen Krümmungsradien in einem Verhältnis von etwa 1 : 30 bis 1 : 40 zu wählen. Dabei kann der kleine Krümmungsradius etwa 0,2 T und der große Krümmungsradius etwa 6,5 T betragen bei einer Tiefe der Spanbrechernut von etwa 0,1 T.

- 5-

Weitere erfindungsgemäße Ausbildungen sind den
Unteransprüchen zu entnehmen und werden mit ihren
Vorteilen in der nachstehenden Beschreibung näher
erläutert. In den beigefügten Zeichnungen zeigt:

Fig. 1          eine Seitenansicht eines
                als Fingerfräser ausgebildeten
                Fräswerkzeugs teilweise im Schnitt,

Fig. 2          eine Stirnansicht des in Fig. 1
                dargestellten Fräsers in Richtung
                des Pfeils II und

Fig. 3          eine Teildraufsicht auf die
                Spanfläche einer Schneide in
                Richtung des Pfeils III in Fig. 2
                in größerem Maßstab.

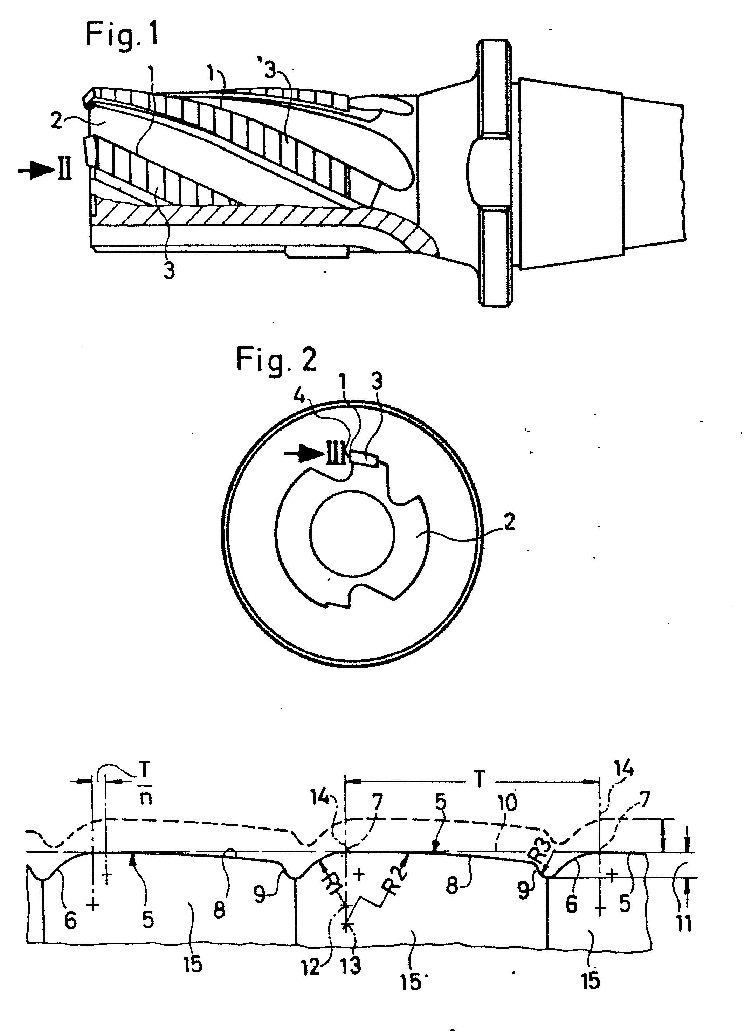

Der in den Fig. 1 und 2 dargestellte Fingerfräser weist
n = 6 am Umfang verteilt angeordnete schraubenlinienförmig verlaufende Schneiden 1 auf, die durch im
Fräserkörper 2 eingesetzte Hartmetall-Schneidplatten 3
gebildet werden. Diese Hartmetall-Schneidplatten 3 sind
in bekannter Weise durch Hartlöten im Fräserkörper 2
befestigt und zwar derart, daß die lange Querschnittseite der im Querschnitt rechteckigen Hartmetall- Schneidplatten parallel zum Fräserumfang verläuft,
so daß die Spanfläche 4 durch eine Schmalseite der
Hartmetall-Schneidplatte 3 gebildet wird.

Zur Erzielung eines ziehenden Schnittes sind die
Schneiden 1 in bekannter Weise schraubenlinienförmig
verlaufend ausgebildet. Über ihre Länge sind sie wie
in Fig. 1 angedeutet, etwa sägenförmig mit einer
Teilung T geformt und es werden so Einzelschneiden
5 gebildet, die von Schneide 1 zu Schneide 1 um
$\frac{T}{n}$ versetzt angeordnet sind, wobei n die Gesamtanzahl
aller Schneiden 1 darstellt. Durch diese versetzte
Anordnung wird insbesondere beim Schruppfräsen bei
geringeren Zerspanungskräften eine hohe Zerspanleistung
ermöglicht.

Die geometrische Form einer Einzelschneide 5 ist
in Fig. 3 in größerem Maßstab dargestellt. Die Einzelschneide 5 wird durch eine mit einem Krümmungsradius
R1 ausgebildeten steil verlaufenden Schneidkante 6
gebildet, die in Punkt 7 in eine flacher verlaufende
Schneidkante 8 mit Krümmungsradius R2 übergeht.

Im Übergang der beiden Schneidkanten 6 und 8 ist eine
Spanbrechernut 9 vorgesehen, mit einem Krümmungsradius R3, wobei diese Spanbrechernut 9 gegenüber der Schneidentangente 10 eine Tiefe 11 aufweist. Dabei gehen
die einzelnen Rundungen der Krümmungsradien R1, R2 und
R3 stetig ineinander über. Bezogen auf die Teilung T
beträgt beim dargestellten Ausführungsbeispiel der
Radius R1 etwa 0,2 T, der Radius R2 etwa 6,5 T und
die Tiefe 11 der Spanbrechernut 9 etwa 0,1 T bei einem
Radius R3 der Spanbrechernut 9 von etwa 0,05 T.

Die Krümmungsmittelpunkte 12 und 13 der Krümmungsradien R1 und R2 liegen auf einer Schneidennormalen 14,
die auch durch den Punkt 7 geht.

Zur Vereinfachung der Herstellung besteht nun eine
Schneide 1 nicht aus einer einzigen Hartmetall-Schneidplatte 3, sondern aus mehreren Hartmetalleinzelstücken
15, die im Ausführungsbeispiel eine der Teilung T entsprechende Länge aufweisen und dicht aneinandergesetzt
sind. Die Herstellung kleiner Hartmetallteile ist
billiger und mit weniger Ausschuß möglich. Die kleineren
Teile sind weniger spannungsempfindlich und ertragen
auch leichter Stöße, so daß ein derart mit Hartmetalleinzelstücken 15 zusammengesetzten Fräswerkzeug eine
lange Lebensdauer aufweist.

Besonders vorteilhaft kann das Fräswerkzeug an der Spanfläche 4 nachgeschärft werden. Durch den Rechteckquerschnitt (Fig. 2) ist ein häufiges Nachschleifen gewährleistet, so daß das Werkzeug bei hoher Nachschärfzahl eine lange Lebenszeit ermöglicht.

Ansprüche

1. Fräswerkzeug mit n schraubenlinienförmig verlaufenden Schneiden, die in ihrem Längsverlauf
in etwa sägeförmig mit einer Teilung T ausgebildete
Einzelschneiden mit je einer steil und einer flach
gegenüber der Fräserachse geneigten Schneidkante
aufgeteilt sind, wobei mindestens eine der Schneidkanten abgerundet ist und die Einzelschneiden um
$\frac{T}{n}$ in Schneidenrichtung versetzt angeordnet sind,
dadurch gekennzeichnet, daß die Einzelschneiden (5)
in an sich bekannter Weise durch auf den Fräserkörper
(2) aufgelötete Hartmetall-Schneidplatten (3) mit
etwa Rechteckquerschnitt gebildet sind, und daß die
lange Querschnittseite etwa parallel zur Umfangsrichtung verlaufend vorgesehen ist.

2. Fräswerkzeug nach Anspruch 1, dadurch gekennzeichnet,
daß jede Schneide (1) durch mehrere Hartmetalleinzelstücke (15) gebildet ist.

3. Fräswerkzeug nach Anspruch 2, dadurch gekennzeichnet,
daß die einzelnen Hartmetallstücke (15) zur Bildung
einer Schneide (1) eng nebeneinander angeordnet sind.

4. Fräswerkzeug nach einem der Ansprüche 1 bis 3, dadurch gekennzeichnet, daß die steile (6) und die flache Schneidkante (8) jeweils etwa eine konstante Krümmung mit einem Krümmungsradius R = 1 bzw. R = 2 aufweisen.

5. Fräswerkzeug nach Anspruch 1, dadurch gekennzeichnet, daß jede Teilung der Schneide (1) eine Spanbrechernut (9) aufweist.

6. Fräswerkzeug nach Anspruch 5, dadurch gekennzeichnet, daß die einzelnen Hartmetallstücke (15) im Bereich der Spanbrechernuten (9) aneinandergrenzen.

7. Fräswerkzeug nach Anspruch 4, dadurch gekennzeichnet, daß die Krümmungsmittelpunkte (12,13) der beiden Schneidkanten (6,8) mit unterschiedlichem Krümmungsradius R1, R2 auf einer Schneidennormalen (14) liegen und daß diese Schneidennormale (14) die Schneide (1) im Übergangspunkt (7) der beiden Krümmungsradien R1, R2 schneidet.

8. Fräswerkzeug nach Anspruch 7, dadurch gekennzeichnet, daß das Verhältnis der beiden unterschiedlichen Krümmungsradien R1, R2 etwa 1 : 33 ist.

9. Fräswerkzeug nach Anspruch 7 oder 8, dadurch gekennzeichnet, daß der kleine Krümmungsradius R1 etwa 0,2 T beträgt.

10. Fräswerkzeug nach Anspruch 7 oder 8, dadurch gekennzeichnet, daß der große Krümmungsradius R2 etwa 6,5 T beträgt.

11. Fräswerkzeug nach einem der Ansprüche 5 bis 10, dadurch gekennzeichnet, daß die Tiefe (11) der Spanbrechernut (9) etwa 0,1 T beträgt.

12. Fräswerkzeug nach Anspruch 5 oder 11, dadurch gekennzeichnet, daß die Spanbrechernut (9) eine gleichmäßige Krümmung mit einem Radius R3 von etwa 0,05 T aufweist.

**Fig. 1**

**Fig. 2**

**Europäisches Patentamt**

# EUROPÄISCHER RECHERCHENBERICHT

EP 81 10 6952

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | GB - A - 879 870 (PUREFOY) | 1 |
| A | WERKSTATT UND BETRIEB, Band 98, Heft 3, März 1965, Seiten 155-162 Darmstadt, DE. K. SCHMALZ et al.: "Auswahl und Einsatz von Hartmetall-Fräswerkzeugen" | 1 |
| | -- | |
| A | US - A - 3 863 316 (YEO) | 1 |
| A | US - A - 2 782 489 (HARGROVE) | 1 |
| A | DE - B - 1 016 093 (MONTAN WERKE) | 1 |
| A | FR - A - 2 130 840 (GARIH) | 1 |
| | ---- | |

**KLASSIFIKATION DER ANMELDUNG (Int. Cl.³)**

B 23 C 5/10
        5/18

**RECHERCHIERTE SACHGEBIETE (Int. Cl.³)**

B 23 C    5/00
B 27 G   13/00
B 23 P   15/00
B 23 B   51/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 16-11-1981 | HORVATH |

EPA form 1503.1   06.78